# EUROPÄISCHE PATENTSCHRIFT

(11) **EP 4 327 952 B1**
(45) Veröffentlichungstag und Bekanntmachung des Hinweises auf die Patenterteilung: **25.12.2024**
(21) Anmeldenummer: 22192206.5
(22) Anmeldetag: 25.08.2022
(51) Int. Cl.: B05B 13/02

(54) **DREHVORRICHTUNG FÜR ROHRE UND ROHRSCHÜSSE**
ROTATING DEVICE FOR PIPES AND PIPE LENGTHS
DISPOSITIF ROTATIF POUR TUBES ET SEGMENTS DE TUBES

(43) Veröffentlichungstag der Anmeldung: 28.02.2024
(73) Patentinhaber: EEW Special Pipe Constructions GmbH, 18147 Rostock (DE)
(72) Erfinder: Staschko, Robert, 18147 Rostock (DE); Sitz, Ulrich, 18147 Rostock (DE); Baum, Johannes, 18147 Rostock (DE); Linde, Max, 18147 Rostock (DE)
(74) Vertreter: Bardehle Pagenberg Partnerschaft mbB Patentanwälte Rechtsanwälte

(56) Entgegenhaltungen:
- CN-A- 112 403 755
- CN-A- 114 042 576
- CN-A- 114 832 961

## Beschreibung

Die Erfindung betrifft eine Drehvorrichtung zur Drehung von Rohren mit großem Durchmesser um ihre Längsachse gemäß dem Oberbegriff von Anspruch 1.

Großrohre, insbesondere aus längs- und rundnahtgeschweißten Stahlblechen, mit einem erheblichen Durchmesser werden beispielsweise in der Erdölindustrie oder bei der Herstellung von großen Bauwerken aus Metall verwendet. Ein wichtiges Einsatzgebiet ist der Fundamentbau für Offshore-Anlagen, insbesondere Windkraftanlagen. Für Großrohre, die im Offshore - Bereich eingesetzt werden, z.B. als Monopiles oder Tripode, sind Rohrdurchmesser von größer 6 m und mittlerweile größer als 9 m keine Seltenheit mehr. Im Verhältnis zum Rohrdurchmesser sind diese großen Rohre sehr dünnwandig ausgebildet.

Vor dem Einsatz werden die Rohre in verschiedenen Arbeitsschritten hergestellt und für den Einsatz abhängig vom Anwendungszweck vorbereitet. Für den Einsatz im Offshore-Bereich werden beispielweise Korrosionsschutzbeschichtungen aufgetragen, um das Rohr vor der Korrosion im Salzwasser zu schützen. Angesichts der Dimensionen des Rohrs erfolgt die Beschichtung während das Rohr liegt. Um die gesamte Oberfläche beschichten zu können, muss das Rohr während des Beschichtungsvorgangs um seine Längsachse gedreht werden. Hierfür wird das Rohr auf Drehvorrichtungen aufgelegt. Die Drehvorrichtungen müssen eine ausreichende Tragfähigkeit aufweisen, um die sehr großen und schweren Rohre tragen zu können. Da die Rohre im Vergleich zu den großen Durchmessern und hohen Massen nur eine geringe Wanddicke aufweisen, besitzen sie eine geringe radiale Steifigkeit. Es besteht daher die Gefahr, dass es bei der Lagerung auf der Drehvorrichtung oder beim Drehen zu einem Einbeulen oder einer Beschädigung der Oberfläche des Rohrs kommt. Auch können beim Drehen des Rohrs zu hohe Spannungen am Rohr auftreten, die zu einer irreversiblen Beschädigung des Rohrs führen. Viele herkömmliche Drehvorrichtungen besitzen bereits keine ausreichende Tragfähigkeit vor dem Hintergrund der derzeitigen Großrohr-Gewichte. Einige Drehvorrichtungen sind zudem für genau einen Rohrdurchmesser ausgelegt, so dass für Rohre mit verschiedenen Rohrdurchmessern verschiedene Drehvorrichtungen bereitgehalten werden müssen.

DE 10 2022 103 490 beschreibt eine Drehvorrichtung zur Drehung von Rohren mit großem Durchmesser um ihre Längsachse. Die Mehrfachdrehvorrichtung weist 6 bis 10 Rollen auf, wobei die Drehachsen der Rollen auf einem Kreisbogen angeordnet sind. Die Rollen sind an einem Grundrahmen nebeneinander aufgereiht. Mit der beschriebenen Drehvorrichtung ist es möglich Rohre mit Rohrdurchmessern von mindestens 6 m trotz ihres Gewichts und ihrer Größe sicher und beschädigungsfrei zu drehen, ohne dass es zu Einbeulungen oder Beschädigungen der Rohroberfläche kommt. Die Drehvorrichtung weist allerdings eine große Zahl von Bauteilen und Rollen auf, so dass sie ein hohes Eigengewicht hat und relativ viel Material für die Fertigung benötigt wird. Weitere bekannte Vorrichtungen sind in CN 114 832 961 A, CN 114 042 576 A und CN 112 403 755 B beschrieben.

Aufgabe der Erfindung ist es eine Drehvorrichtung bereit zu stellen, die die vorstehenden Nachteile überwindet und insbesondere eine beschädigungsfreie Lagerung und sichere und gleichmäßige Drehung von Rohren, wie Monopiles oder Stahlrohren, mit einem Durchmesser von mindestens 6 m ermöglicht, ohne dass es zu einer Verformung des Rohrs, wie Eindellungen bzw. Einbuchtungen kommt. Die Drehvorrichtung soll zudem flexibel für verschiedene Rohrdurchmesser einsetzbar sein und aus relativ wenigen Bauteilen aufgebaut sein.

Hauptmerkmale der Erfindung sind im kennzeichnenden Teil von Anspruch 1 angegeben. Weitere Ausführungsformen sind Gegenstand der Unteransprüche oder nachfolgend beschrieben.

Die erfindungsgemäße Drehvorrichtung zur Drehung von Rohren mit großem Durchmesser um ihre Längsachse weist einen Grundkörper auf und zwei Tragvorrichtungen, die am Grundkörper angeordnet sind, wobei jede Tragvorrichtung einen Sockel und mindestens ein Wippelement umfasst. Das Wippelement ist schwenkbar auf einer Achse gelagert. Die Achse ist in einer Aufnahme des Sockels angeordnet und der Sockel ist mit dem Grundkörper verbunden. Jede der beiden Tragvorrichtungen hat ein erstes Wippelement und ein zweites Wippelement. Das erste Wippelement weist eine erste Achse auf und ist auf der ersten Achse in der Aufnahme des Sockels schwenkbar gelagert, wobei eine Hauptschwenkachse der Tragvorrichtung durch die erste Achse verläuft. Das erste Wippelement weist zwei Hauptschwenkarme auf, die sich von der ersten Achse erstrecken und in einem festen Winkel zueinander angeordnet sind. Ein erster Hauptschwenkarm des ersten Wippelements hat einen Ausleger. Der Ausleger ist als Fortsetzung des Schwenkarms ausgebildet und verlängert diesen. Am äußeren Ende des Auslegers, das am weitesten von der ersten Achse entfernt ist, ist eine Rollenachse angeordnet, auf der eine Rolle drehbar am Ausleger gelagert ist. Ein zweiter Hauptschwenkarm des ersten Wippelements weist an einem Ende eine Aufnahme für eine zweite Achse auf. Auf der zweiten Achse ist ein zweites Wippelement schwenkbar gelagert. Durch die zweite Achse verläuft eine Nebenschwenkachse der Tragvorrichtung. Das zweite Wippelement weist zwei Schwenkarme auf, die sich von der zweiten Achse erstrecken und in einem festen Winkel zueinander angeordnet sind. An jedem Schwenkarm des zweiten Wippelements ist jeweils eine Rollenachse angeordnet, auf der eine Rolle drehbar am Schwenkarm gelagert ist. Die Hauptschwenkachse und die Nebenschwenkachse verlaufen parallel zueinander. Die Tragvorrichtung kann um beide Schwenkachsen unabhängig voneinander geschwenkt werden. Jede Rolle hat eine Rollenachse und eine durch die Rollenachse verlaufende Drehachse, wobei die Drehachsen der Rollen parallel zueinander und parallel zur Längsachse eines auf der Drehvorrichtung gelagerten Rohrs verlaufen. Nur die Rollen bilden die Auflagepunkte für ein Rohr, so dass beim Auflegen eines Rohrs auf die Drehvorrichtung nur die Rollen an der Rohroberfläche anliegen.

Der Grundkörper stellt die Basis der Drehvorrichtung dar, die auf dem Boden oder auf einem Transportfahrzeug oder anderen Unterlage steht. Der Grundkörper hat eine Oberseite auf der die Tragvorrichtungen montiert sind. Bevorzugt ist die Oberseite als plane Fläche ausgebildet, z.B. mit einem etwa rechteckigen Grundriss. Die plane Fläche kann z.B. als Gleitfläche zum stufenlosen Verstellen der Tragvorrichtungen gestaltet sein und/oder mit äquidistant verteilten Bohrungen zum Fixieren der Tragvorrichtungen mittels Steckbolzen. Der Grundkörper kann an seiner Unterseite Standfüße aufweisen mit denen er auf dem Untergrund steht. Zusätzlich können am Grundkörper weitere Bauteile, wie z.B. Anschlagelemente zum Befestigen an einem Kran vorgesehen sein.

Bevorzugt sind die Rollenachsen am äußersten Ende des Auslegers von der ersten Achse aus und jeweils am äußersten Ende der Schwenkarme des zweiten Wippelements von der zweiten Achse aus angeordnet, so dass die Rollen über den Ausleger und das zweite Wippelement hinausragen und die Rollen in Richtung des Rohrs die Auflagepunkte für das Rohr bilden.

Die Rollen sind in einer Ausführungsform als Mitläuferrollen ausgestaltet und weisen keinen Antrieb auf. In einer weiteren Ausführungsform sind die Rollen als angetriebene Rollen ausgestaltet.

Jede der beiden Tragvorrichtungen umfasst einen Sockel und zwei Wippelemente, sowie insgesamt drei Rollen. Der Sockel der Tragvorrichtung weist eine Aufnahme auf, die als Achslager ausgebildet ist. In der Aufnahme ist ein erstes Wippelement auf einer ersten Achse schwenkbar gelagert, wobei durch die erste Achse die Hauptschwenkachse der Tragvorrichtung verläuft. Das erste Wippelement weist zwei Hauptschwenkarme auf. Die Hauptschenkarme sind bevorzugt gleich lang und weisen die gleiche Grundform auf. Weiter bevorzugt sind sie integral miteinander verbunden. Der erster Hauptschwenkarm des ersten Wippelements hat einen Ausleger. Am Ende des Auslegers ist eine Rolle angeordnet. Die Rolle weist eine Rollenachse auf, auf der sie drehbar am Ausleger gelagert ist. Der zweite Hauptschwenkarm weist eine Aufnahme für eine zweite Achse auf, wobei die Aufnahme als Achslager ausgebildet ist. Ein zweites Wippelement ist auf dieser zweiten Achse gelagert. Das zweite Wippelement ist an einem Ende des zweiten Hauptschwenkarms angeordnet. Durch die zweite Achse verläuft eine Nebenschwenkachse der Tragvorrichtung. Das zweite Wippelement weist zwei Schwenkarme auf, die in einem festen Winkel zueinander angeordnet sind. Die Schwenkarme sind bevorzugt gleich lang und weisen die gleiche Grundform auf. Weiter bevorzugt sind sie integral miteinander verbunden. An den Enden der Schwenkarme des zweiten Wippelements ist jeweils eine Rolle angeordnet. Jede Rolle weist eine Rollenachse auf, auf der sie drehbar am Schwenkarm gelagert ist. Die Schwenkarme des zweiten Wippelements sind in einer bevorzugten Ausführung spiegelsymmetrisch ausgebildet, wobei die Spiegelebene durch die zweite Achse verläuft.

Das Wippelement umfasst bevorzugt mindestens zwei parallele und miteinander verbundene Seitenträger, wobei die Rolle zwischen den Seitenträgern angeordnet ist. Das erste Wippelement umfasst in einer Ausführungsform vier parallele in weiten Teilen deckungsgleiche Seitenträger. Die Seitenträger umfassen sowohl die Hauptschwenkarme, als auch den Ausleger. Es gibt in dieser Ausführungsform zwei äußere Seitenträger, die die Außenseiten des ersten Wippelements bilden und zwei innere Seitenträger. Die beiden inneren Seitenträger können über ein oder mehrere Stabilisierungselemente miteinander verbunden sein. Die äußere Rolle, das ist die am Ausleger gelagerte Rolle, ist dann zwischen den beiden inneren Seitenträgern angeordnet. Die erste Achse und die zweite Achse führen durch alle vier Seitenträger, ebenso wie die Rollenachse der äußeren Rolle.

Das zweite Wippelement umfasst in einer Ausführungsform bevorzugt zwei parallele in weiten Teilen deckungsgleiche Seitenträger. Die Seitenträger können über ein oder mehrere Stabilisierungselemente miteinander verbunden sein. Die Seitenträger bilden die beiden Schwenkarme des zweiten Wippelements. Die zweite Achse und die Rollenachsen führen durch beiden Seitenträger. Die Seitenträger des zweiten Wippelements sind beispielsweise jeweils zwischen einem äußeren und einem inneren Seitenträger der ersten Wippvorrichtung angeordnet.

In einer Ausführungsform ist der Sockel der Tragvorrichtung fest mit dem Grundkörper verbunden, z.B. mit dem Grundkörper verschweißt.

In einer weiteren Ausführungsform ist der Sockel der Tragvorrichtung verstellbar am Grundkörper montiert, bevorzugt ist er mit Verbindungselementen in Öffnungen des Grundkörpers montiert. Der Sockel ist in dieser Ausführungsform lösbar an dem Grundkörper befestigt, so dass seine Position auf dem Grundkörper verstellt werden kann. Der Grundkörper weist hierfür bevorzugt rasterförmige Öffnungen, schlitzförmige Öffnungen oder eine Montageschiene zur Aufnahme der Verbindungselemente auf, so dass eine stufenlose oder stufenweise Einstellung des Abstands zwischen den Tragvorrichtungen auf dem Grundkörper möglich ist. Es ist auch möglich einen Sockel einer ersten Tragvorrichtung fest mit dem Grundkörper zu verbinden und den Sockel einer zweiten Tragvorrichtung verstellbar zu gestalten. Der Abstand kann bei dieser Ausführung nur durch Verstellen der Position einer Tragvorrichtung auf dem Grundkörper und somit wenig Montageaufwand erreicht werden.

Die Tragvorrichtungen sind bevorzugt spiegelsymmetrisch auf dem Grundkörper positioniert bezogen auf eine Mittelachse M des Grundkörpers, wobei der Ausleger des ersten Wippelements jeweils zur Außenseite des Grundkörpers angeordnet ist und die zweiten Wippelemente jeweils auf der zur Mittelachse weisenden Seite angeordnet sind. Die beiden zweiten Wippelement sind somit jeweils auf der Innenseite der Tragvorrichtung zur Mitte der Drehvorrichtung hin angeordnet, während die Ausleger des ersten Wippelements jeweils als Lastarm zur Außenseite der Drehvorrichtung weisen.

Die erfindungsgemäße Drehvorrichtung wird zum Drehen (Rotation um die Längsachse) von längsnaht- und rundnahtverschweißten Stahlrohren mit großen Durchmessern, sogenannten Großrohren, und Großrohrschüssen mit einem Rohrdurchmesser von mindestens 6 m, bevorzugt mindestens 8 bis 10 m verwendet. Auch Rohrdurchmesser bis 12 m und darüber hinaus, wie sie z.B. bei schwimmenden Offshore Gründungsstrukturen (Spar buoys) auftreten, können mit der Drehvorrichtung gedreht werden. Längsnahtverschweißte Großrohrschüsse werden aus Stahlblechtafeln hergestellt. Der Blechtafelzuschnitt wird zunächst rundgebogen und die offenen Kanten des so entstandenen geschlitzten Rohrschusses werden mit einer provisorischen Naht zusammengeheftet (Heftnaht), welche später in Produktionsprozess wieder entfernt wird. Der heftgeschweißte Rohrschuss wird an einem Schweißplatz positioniert und zunächst die Innennaht und dann die Außennaht am Rohrschuss angebracht. Anschließend kann das Rohr weiterbearbeitet, z.B. beschichtet werden.

Die Rohre weisen bei üblicher Bauweise eine Wanddicke von 35 mm bis 250 mm, bevorzugt 40 bis 200 mm, besonders bevorzugt 50 mm bis 170 mm auf. Großrohre und Großrohrschüsse mit einem Durchmesser von 6 m bis 10 m haben bevorzugt eine Wanddicke von 50 mm bis 170 mm. Ein Großrohrschuss hat üblicherweise eine Länge von 2 m bis 4,2 m. Die Rohre werden aus einer Vielzahl von Rohrschüssen zusammengeschweißt und weisen dabei Längen von bis zu 120 m auf. Die Rohre wiegen in diesen Dimensionen im Mittel über tausend Tonnen. Mit der erfindungsgemäßen Drehvorrichtung ist es möglich diese Rohre trotz ihres Gewichts und ihrer Größe sicher und beschädigungsfrei zu drehen, ohne dass es zu Einbeulungen oder Beschädigungen der Rohroberfläche kommt.

Der Grundkörper und ggf. die Tragvorrichtungen bestehen bevorzugt aus Stahl, besonders bevorzugt aus Baustahl. Besonders bevorzugt bestehen der Grundkörper und die Tragvorrichtungen aus Stahl.

Die Tragvorrichtung kann um zwei Achsen, nämlich die Hauptschwenkachse und die Nebenschwenkachse schwenken und sich so dem Durchmesser des aufgelegten Rohrs anpassen. Durch das Schwenken der Wippelement wird die Position der Rollen verändert. Beim Aufsetzen des Rohrs auf die Drehvorrichtung berührt das Rohr als erstes die Rolle im zweiten Wippelement, die zur Mitte gerichtet ist. Durch das Gewicht des Rohrs wird die Rolle nach unten gedrückt und das zweite Wippelement schwenkt um die Nebenschwenkachse nach unten, solange bis die weitere im zweiten Wippelement angeordnete Rolle ebenfalls an der Rohroberfläche anliegt. Gleichzeitig wird durch das Gewicht auch das erste Wippelement nach unten gedrückt und schwenkt um die Hauptschwenkachse ebenfalls nach unten zur Mitte, bis auch die äußere Rolle am Ausleger an der Rohroberfläche anliegt. Die Größe der Schwenkung um die Schwenkachse hängt dabei vom Rohrdurchmesser und dem Abstand der Tragvorrichtungen zueinander ab. Die Wippelemente schwenken jeweils um die Schwenkachse als Drehpunkt, wobei die Schwenkbewegung um einen Auslenkwinkel bis zu einem Anschlag erfolgt.

Die erfindungsgemäße Drehvorrichtung passt sich bedingt durch die Wippelemente an verschiedene Rohrdurchmesser an, so dass kein Austausch der Drehvorrichtung notwendig ist und nicht mehrere Drehvorrichtungen für verschiedene Rohrdurchmesser bereitgehalten werden müssen. Dieses ermöglicht einen flexiblen Einsatz durch Variabilität der Drehvorrichtung für unterschiedliche Rohrdurchmesser ohne Umbauaufwand. Bei großen Unterschieden zwischen den Rohrdurchmessern ist die Drehvorrichtung in der Ausführung mit verstellbaren Sockeln zudem mit wenigen Umbauschritten an andere Rohrdurchmesser anpassbar.

Gegenstand der Erfindung ist weiterhin ein System aufweisend mindestens 2 Drehvorrichtungen gemäß einem der Patentansprüche 1 bis 7 und ein Rohr mit einem Rohrdurchmesser von mindestens 8 m.

Die erfindungsgemäße Drehvorrichtung wird in Ausführungsbeispielen anhand der Zeichnungen näher erläutert. Es zeigen:
- Fig. 1: eine Ausführungsform einer erfindungsgemäßen Drehvorrichtung,
- Fig. 2: einen Ausschnitt aus einer erfindungsgemäßen Drehvorrichtung in perspektivischer Ansicht,
- Fig. 3: einen Ausschnitt aus einer erfindungsgemäßen Drehvorrichtung in Seitenansicht und
- Fig. 4: eine Seitenansicht einer erfindungsgemäßen Drehvorrichtung mit aufliegendem Rohr.

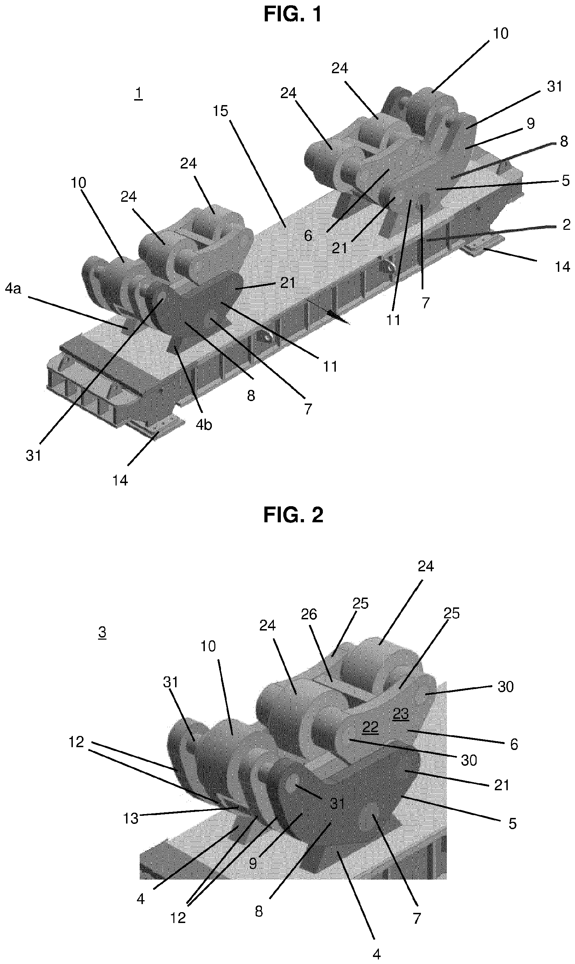

Figur 1 zeigt eine perspektivische Ansicht einer erfindungsgemäßen Drehvorrichtung 1. Die Drehvorrichtung weist einen Grundkörper 2 und zwei Tragvorrichtungen 3 auf. Die Tragvorrichtungen haben jeweils einen Sockel 4. Der Sockel 4 wird aus zwei Sockelelementen 4a, 4b gebildet, die jeweils einen dreieckigen Längsschnitt haben, d.h. als dreiseitiges Prisma ausgestaltet sind. Der Sockel 4 ist auf der Oberseite 15 des Grundkörpers 2 befestigt. Am Sockel 4 ist jeweils über eine erste Achse 7 ein erstes Wippelement 5 schwenkbar gelagert. Das erste Wippelement 5 hat zwei Hauptschenkarme 8 und 11. Am ersten Hauptschwenkarm 8 ist ein Ausleger 9 angeordnet. Der erste Hauptschwenkarm 8 und der Ausleger 9 sind in dieser Ausführungsform integral miteinander verbunden und der Ausleger 9 stellt eine Fortsetzung des ersten Hauptschwenkarms dar. Am Ende des Auslegers 9 ist eine Rolle 10 auf einer Rollenachse 31 drehbar gelagert. Der zweite Hauptschenkarm 11 ist zur Mitte der Drehvorrichtung d.h. zur anderen Tragvorrichtung orientiert. Am Ende des zweiten Hauptschwenkarms 11 ist eine Aufnahme für eine zweite Achse 21 angeordnet. Auf der zweiten Achse 21 ist ein zweites Wippelement 6 schwenkbar gelagert. Das zweite Wippelement weist zwei Schwenkarme auf. An den Enden der Schwenkarme ist jeweils eine Rolle 24 auf einer Rollenachse 30 drehbar gelagert. Der Grundkörper 12 steht auf dem Boden. Hierzu weist er Standfüße 14 als Aufstandsfläche auf, die auf dem Boden stehen.

Figur 2 zeigt eine perspektivische Ansicht einer Tragvorrichtung 3 aus Figur 1. Am Sockel 4 ist über die erste Achse 7 das erste Wippelement 5 montiert. Der erste Hauptschwenkarm 8 erstreckt sich in der Figur nach links von der Mitte der Drehvorrichtung weg nach außen. Der erste Schwenkarm 8 ist verlängert um den Ausleger 9 zu bilden. Das erste Wippelement 5 wird von vier parallel zueinander angeordneten, miteinander verbundenen Seitenträgern 12 gebildet, die sowohl die Hauptschwenkarme, als auch die Ausleger umfassen. Es gibt zwei äußere Seitenträger, die die Außenseiten des ersten Wippelements bilden, und zwei innere Seitenträger. Die beiden inneren Seitenträger 12 sind über ein Stabilisierungselement 13 miteinander verbunden. Die äußere Rolle 10 ist zwischen den beiden inneren Seitenträgern 12 angeordnet. Die erste Achse 7 führt durch alle vier Seitenträger, ebenso wie die zweite Achse 21 und die Rollenachse 31 der äußeren Rolle 10. Auf der zweiten Achse 21 ist das zweite Wippelement 6 schwenkbar gelagert. Das zweite Wippelement 6 wird aus zwei parallel zueinander angeordneten, miteinander verbundenen Seitenträgern 25 gebildet. Die Seitenträger 25 sind mittig zwischen den Rollen 24 über ein Stabilisierungselement 26 miteinander verbunden. Die Seitenträger bilden die beiden Schwenkarme des zweiten Wippelements. Die zweite Achse 21 und die Rollenachsen 30 führen durch beiden Seitenträger 25. Die beiden zweiten Wippelemente sind jeweils auf der Innenseite der Tragvorrichtung zur Mitte der Drehvorrichtung hin angeordnet, während die Ausleger des ersten Wippelements jeweils als Lastarm zur Außenseite der Drehvorrichtung weisen. Die Seitenträger 25 des zweiten Wippelements sind jeweils zwischen einem äußeren und einem inneren Seitenträger 12 der ersten Wippvorrichtung angeordnet.

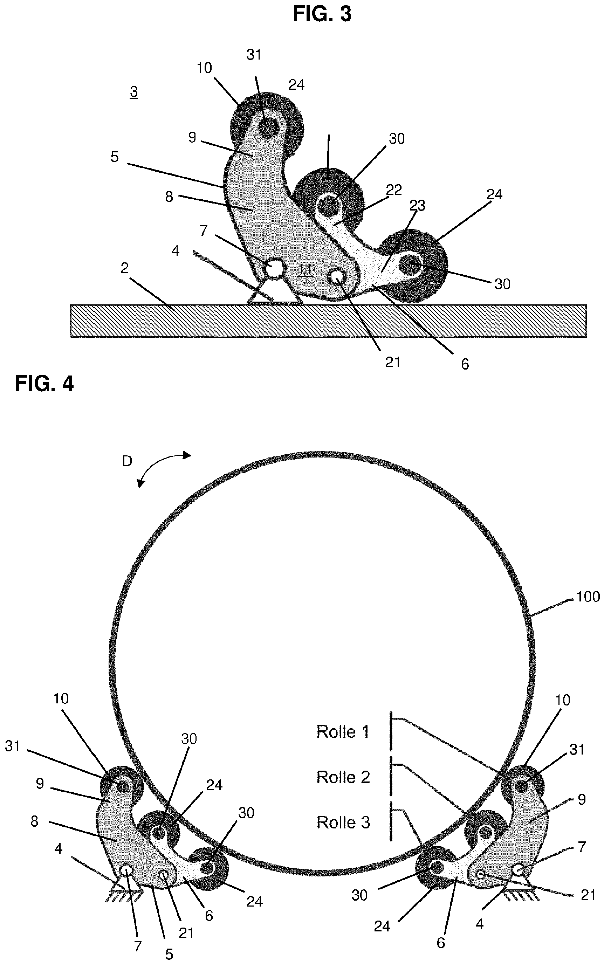

Figur 3 zeigt eine erfindungsgemäße Tragvorrichtung 3 in einer Seitenansicht. Das erste Wippelement 5 ist nach rechts geschwenkt, so dass der Ausleger 9 am ersten Hauptschwenkarm 8 nach oben zeigt. Der kurze Hauptschwenkarm 11 ist nach unten geschwenkt. Das zweite Wippelement 6 ist mittig ausgerichtet. Die beiden Schwenkarme 22 und 23 des zweiten Wippelements sind in dieser Ausführungsform spiegelsymmetrisch ausgestaltet.

Figur 4 zeigt eine erfindungsgemäße Drehvorrichtung 1 mit aufliegendem Rohr 100 in einer schematischen Darstellung. Die Drehvorrichtung 1 weist zwei Tragvorrichtungen 3 auf. Die Tragvorrichtungen 3 haben einen Sockel 4, der auf einem Grundkörper 2 (nicht dargestellt) montiert ist. Die Tragvorrichtungen 3 sind jeweils an der Hauptschwenkachse, die durch die erste Achse 7 verläuft, zum Rohr d.h. zur Mittelachse des Grundkörpers 2 geschwenkt. Das Rohr 100 liegt ausschließlich auf den sechs Rollen 10 und 24 der Drehvorrichtung auf. Die Rollen 10 und 24 bilden die einzigen Auflagepunkte für das Rohr 100, so dass beim Auflegen eines Rohrs 100 auf die Drehvorrichtung nur die Rollen an der Rohroberfläche anliegen.

Jede Rolle weist eine Rollenachse und eine durch die Rollenachse verlaufende Drehachse auf. Die Drehachsen der Rollen verlaufen parallel zueinander und parallel zur Längsachse eines auf der Drehvorrichtung gelagerten Rohrs. Die Drehrichtung des Rohrs ist durch den Pfeil D angezeigt.

Die Erfindung ist nicht auf eine der vorbeschriebenen Ausführungsformen beschränkt, sondern in vielfältiger Weise abwandelbar.

### Bezugszeichen liste

| | |
|---|---|
| Drehvorrichtung | 1 |
| Grundkörper | 2 |
| Tragvorrichtung | 3 |
| Sockel | 4 |
| erstes Wippelement | 5 |
| zweites Wippelement | 6 |
| erste Achse | 7 |
| erster Hauptschwenkarm | 8 |
| Ausleger | 9 |
| Rolle | 10 |
| zweiter Hauptschwenkarm | 11 |
| Seitenträger | 12 |
| Stabilisierungselement | 13 |
| Standfuß | 14 |
| Oberseite Grundkörper | 15 |
| zweite Achse | 21 |
| Schwenkarm | 22 |
| Schwenkarm | 23 |
| Rolle | 24 |
| Seitenträger | 25 |
| Stabilisierungselement | 26 |
| Rollenachse | 30 |
| Rollenachse | 31 |
| Rohr | 100 |
| Drehrichtung Rohr | D |

## Patentansprüche

1. Drehvorrichtung (1) zur Drehung von Rohren mit großem Durchmesser um ihre Längsachse, aufweisend
- einen Grundkörper (2),
- zwei Tragvorrichtungen (3), die auf dem Grundkörper (2) angeordnet sind,
wobei jede Tragvorrichtung (3) einen Sockel (4) und mindestens ein Wippelement umfasst, das schwenkbar in einer Aufnahme des Sockels gelagert ist und
- der Sockel (4) mit dem Grundkörper (2) verbunden ist,
**dadurch gekennzeichnet, dass**
- jede Tragvorrichtung (3) ein erstes Wippelement (5) und ein zweites Wippelement (6) umfasst,
- das erstes Wippelement (5) eine erste Achse (7) aufweist und auf der ersten Achse (7) in der Aufnahme des Sockels schwenkbar gelagert ist, wobei eine Hauptschwenkachse durch die erste Achse (7) verläuft,
- das erste Wippelement (5) zwei Hauptschwenkarme (8, 11) aufweist, die sich von der ersten Achse (7) erstrecken und in einem festen Winkel zueinander angeordnet sind,
- ein erster Hauptschwenkarm (8) des ersten Wippelements einen Ausleger (9) aufweist und am äußeren Ende des Auslegers (9) eine Rollenachse (31) angeordnet ist, auf der eine Rolle (10) drehbar am Ausleger gelagert ist,
- ein zweiter Hauptschwenkarm (11) des ersten Wippelements an einem Ende eine Aufnahme für eine zweite Achse (21) aufweist,
- ein zweites Wippelement (6) auf der zweiten Achse (21) schwenkbar gelagert ist, wobei durch die zweite Achse (21) eine Nebenschwenkachse verläuft,
- das zweite Wippelement (6) zwei Schwenkarme (22, 23) aufweist, die sich von der zweiten Achse erstrecken und in einem festen Winkel zueinander angeordnet sind,
- an jedem Schwenkarm (22, 23) des zweiten Wippelements jeweils eine Rollenachse (30) angeordnet ist und auf jeder Rollenachse (30) eine Rolle (24) drehbar am Schwenkarm gelagert ist,
- die Hauptschwenkachse und die Nebenschwenkachse parallel zueinander verlaufen,
- jede Rolle (10, 24) eine Rollenachse (30, 31) und eine durch die Rollenachse verlaufende Drehachse aufweisen und die Drehachsen der Rollen (10, 24) parallel zueinander und parallel zur Längsachse eines auf der Drehvorrichtung gelagerten Rohrs (100) verlaufen und
- die Rollen (10, 24) Auflagepunkte für ein Rohr (100) bilden, so dass beim Auflegen eines Rohrs (100) auf die Drehvorrichtung (1) nur die Rollen (10,24) an der Rohroberfläche anliegen.

2. Drehvorrichtung (1) gemäß Patentanspruch 1 **dadurch gekennzeichnet, dass** die Schwenkarme (22, 23) des zweiten Wippelements (6) spiegelsymmetrisch zueinander ausgebildet sind.

3. Drehvorrichtung (1) gemäß Patentanspruch 1 oder 2 **dadurch gekennzeichnet, dass** das Wippelement (5, 6) mindestens zwei parallele und miteinander verbundene Seitenträger (12, 25) umfasst und die Rolle (10, 24) zwischen den Seitenträgern (12, 25) angeordnet ist.

4. Drehvorrichtung (1) gemäß einem der vorhergehenden Patentansprüche **dadurch gekennzeichnet, dass** der Sockel (4) fest mit dem Grundkörper (2) verbunden ist.

5. Drehvorrichtung (1) gemäß einem der Patentansprüche 1 bis 3 **dadurch gekennzeichnet, dass** der Sockel (4) mit Verbindungselementen am Grundkörper montiert ist, bevorzugt verstellbar montiert ist, und der Grundkörper bevorzugt rasterförmige Öffnungen, schlitzförmige Öffnungen oder eine Montageschiene zur Aufnahme der Verbindungselemente aufweist.

6. Drehvorrichtung (1) gemäß einem der vorhergehenden Patentansprüche **dadurch gekennzeichnet, dass** die Tragvorrichtungen (3) spiegelsymmetrisch auf dem Grundkörper (2) positioniert sind bezogen auf eine Mittelachse (M) des Grundkörpers, wobei der Ausleger (9) des ersten Wippelements (5) jeweils zur Außenseite des Grundkörpers angeordnet ist und die zweiten Wippelemente (6) jeweils auf der zur Mittelachse weisenden Seite angeordnet sind.

7. Drehvorrichtung (1) gemäß einem der vorhergehenden Patentansprüche, **dadurch gekennzeichnet, dass** die Rollenachsen (30) am äußersten vertikalen des Auslegers und des zweiten Wippelements angeordnet sind und die Rollen (10, 24) über den Ausleger und das zweite Wippelement hinausragen, so dass die Rollen (10, 24) in Richtung des Rohrs den äußersten Kontaktpunkt bilden.

8. System aufweisend mindestens 2 Drehvorrichtungen gemäß einem der Patentansprüche 1 bis 7 und ein Rohr mit einem Rohrdurchmesser von mindestens 8 m.

## Claims

1. Turning device (1) for turning pipes with a large diameter about their longitudinal axis, comprising
- a base body (2),
- two supporting devices (3) that are arranged on the base body (2), wherein each supporting device (3) comprises a pedestal (4) and at least one rocker element that is pivotably mounted in a receptacle of the pedestal and
- the pedestal (4) is connected to the base body (2),
**characterized in that**
- each supporting device (3) comprises a first rocker element (5) and a second rocker element (6),
- the first rocker element (5) comprises a first axle (7) and is pivotably mounted on the first axle (7) in the receptacle of the pedestal, wherein a main pivot axis runs through the first axle (7),
- the first rocker element (5) comprises two main pivot arms (8, 11) that extend out from the first axle (7) and are arranged at a fixed angle to one another,
- a first main pivot arm (8) of the first rocker element comprises a side arm (9) and, at the outer end of the side arm (9), a roller axle (31) is arranged on which a roller (10) is rotatably mounted on the side arm,
- a second main pivot arm (11) of the first rocker element comprises at an end a receptacle for a second axle (21),
- a second rocker element (6) is pivotably mounted on the second axle (21), wherein a secondary pivot axis runs through the second axle (21),
- the second rocker element (6) comprises two pivot arms (22, 23) which extend out from the second axle and are arranged at a fixed angle to one another,
- on each pivot arm (22, 23) of the second rocker element, one roller axle (30) each is arranged and a roller (24) is rotatably mounted on the pivot arm on each roller axle (30),
- the main pivot axis and the secondary pivot axis run parallel to one another,
- each roller (10, 24) has a roller axle (30, 31) and a rotation axis running through the roller axle, and the rotation axes of the rollers (10, 24) run parallel to one another and parallel to the longitudinal axis of a pipe (100) supported on the turning device, and
- the rollers (10, 24) form contact points for a pipe (100), so that when a pipe (100) is being positioned on the turning device (1), only the rollers (10, 24) bear against the pipe surface.

2. Turning device (1) according to patent claim 1, **characterized in that** the pivot arms (22, 23) of the second rocker element (6) are embodied to be in mirror symmetry to one another.

3. Turning device (1) according to patent claim 1 or 2, **characterized in that** the rocker element (5, 6) comprises at least two parallel side members (12, 25) that are connected to one another and the roller (10, 24) is arranged between the side members (12, 25).

4. Turning device (1) according to one of the preceding patent claims, **characterized in that** the pedestal (4) is connected to the base body (2) in a fixed manner.

5. Turning device (1) according to one of patent claims 1 through 3, **characterized in that** the pedestal (4) is mounted, is preferably adjustably mounted, on the base body using connecting elements and the base body preferably comprises grid-shaped openings, slot shaped openings, or a mounting rail to receive the connecting elements.

6. Turning device (1) according to one of the preceding patent claims, **characterized in that** the supporting devices (3) are positioned on the base body (2) in mirror symmetry in relation to a center axis (C) of the base body, wherein the side arm (9) of the first rocker element (5) is respectively arranged towards the outer side of the base body and the second rocker elements (6) are respectively arranged on the side facing the center axis.

7. Turning device (1) according to one of the preceding patent claims, **characterized in that** the roller axles (30) are arranged at the outermost vertical of the side arm and of the second rocker element and the rollers (10, 24) protrude past the side arm and the second rocker element so that the rollers (10, 24) form the outermost contact point in the direction of the pipe.

8. System comprising at least 2 turning devices according to one of patent claims 1 through 7 and a pipe having a pipe diameter of at least 8 m.

## Revendications

1. Dispositif de rotation (1) pour faire tourner des tuyaux de grand diamètre autour de leur axe longitudinal, comprenant
- un corps de base (2),
- deux dispositifs de support (3), qui sont disposés sur le corps de base (2),
chaque dispositif de support (3) comprenant un socle (4) et au moins un élément basculant qui est monté de manière à pouvoir pivoter dans un logement du socle, et le socle (4) étant relié au corps de base (2),
**caractérisé en ce que**
- chaque dispositif de support (3) comprend un premier élément basculant (5) et un deuxième élément basculant (6),
- le premier élément basculant (5) comprend un premier axe (7) et est monté de manière à pouvoir pivoter sur le premier axe (7) dans le logement du socle, dans lequel un axe de pivotement principal passe par le premier axe (7),
- le premier élément basculant (5) comprend deux bras de pivotement principaux (8, 11) qui s'étendent à partir du premier axe (7) et sont disposés l'un par rapport à l'autre selon un angle fixe,
- un premier bras de pivotement principal (8) du premier élément basculant comprend une chape (9), et sur l'extrémité extérieure de la chape (9) est disposé un axe de roulette (31) sur lequel une roulette (10) est montée de manière à pouvoir tourner sur la chape,
- un deuxième bras de pivotement principal (11) du premier élément basculant comprend sur une extrémité un logement pour un deuxième axe (21),
- un deuxième élément basculant (6) est monté de manière à pouvoir pivoter sur le deuxième axe (21), un axe de pivotement secondaire passant par le deuxième axe (21),
- le deuxième élément basculant (6) comprend deux bras de pivotement (22, 23) qui s'étendent à partir du deuxième axe et sont disposés l'un par rapport à l'autre selon un angle fixe,
- un axe de roulette (30) est disposé respectivement sur chaque bras de pivotement (22, 23) du deuxième élément basculant, et une roulette (24) est montée de manière à pouvoir tourner sur le bras de pivotement sur chaque axe de roulette (30),
- l'axe de pivotement principal et l'axe de pivotement secondaire s'étendent parallèlement l'un à l'autre,
- chaque roulette (10, 24) comprend un axe de roulette (30, 31) et un axe de rotation passant par l'axe de roulette, et les axes de rotation des roulettes (10, 24) s'étendent parallèlement les uns aux autres et parallèlement à l'axe longitudinal d'un tuyau (100) monté sur le dispositif de rotation, et
- les roulettes (10, 24) forment des points d'appui pour un tuyau (100), de sorte que lorsqu'un tuyau (100) est posé sur le dispositif de rotation (1), seules les roulettes (10, 24) reposent sur la surface du tuyau.

2. Dispositif de rotation (1) selon la revendication 1, **caractérisé en ce que** les bras de pivotement (22, 23) du deuxième élément basculant (6) sont réalisés de manière symétrique en miroir l'un par rapport à l'autre.

3. Dispositif de rotation (1) selon la revendication 1 ou 2, **caractérisé en ce que** l'élément basculant (5, 6) comprend au moins deux supports latéraux (12, 25) parallèles et reliés entre eux et la roulette (10, 24) est disposée entre les supports latéraux (12, 25).

4. Dispositif de rotation (1) selon l'une des revendications précédentes, **caractérisé en ce que** le socle (4) est relié de manière solidaire au corps de base (2).

5. Dispositif de rotation (1) selon l'une des revendications 1 à 3, **caractérisé en ce que** le socle (4) est monté avec des éléments de liaison sur le corps de base, est monté de préférence de manière ajustable, et le corps de base comprend de préférence des ouvertures en forme de grille, des ouvertures en forme de fente ou un rail de montage pour recevoir les éléments de liaison.

6. Dispositif de rotation (1) selon l'une des revendications précédentes, **caractérisé en ce que** les dispositifs de support (3) sont positionnés de manière symétrique en miroir sur le corps de base (2) par rapport à un axe central (M) du corps de base, la chape (9) du premier élément basculant (5) étant disposée respectivement vers le côté extérieur du corps de base et les deuxièmes éléments basculants (6) étant disposés respectivement sur le côté tourné vers l'axe central.

7. Dispositif de rotation (1) selon l'une des revendications précédentes, **caractérisé en ce que** les axes de roulette (30) sont disposés à la verticale la plus extérieure de la chape et du deuxième élément basculant et les roulettes (10, 24) dépassent de la chape et du deuxième élément basculant, de sorte que les roulettes (10, 24) forment le point de contact le plus extérieur en direction du tuyau.

8. Système comprenant au moins deux dispositifs de rotation selon l'une des revendications 1 à 7, et un tuyau avec un diamètre de tuyau d'au moins 8 m.
